# EUROPEAN PATENT APPLICATION

(11) **EP 4 847 355 A1**
(43) Date of publication of application: **02.12.2026**
(21) Application number: 26162138.7
(22) Date of filing: 03.03.2026
(51) Int. Cl.: B62D 35/00, B62D 35/02, B62D 37/02

(54) **DEPLOYABLE AND ACTIVE REAR WING ASSEMBLY WITH SAFETY FEATURES**

(30) Priority: 18.03.2025 US 202519082941; 08.08.2025 US 202519295293
(71) Applicant: Tesla, Inc., Austin, TX 78725 (US)
(72) Inventor: LEMIRE, David, Austin, Texas, 78725 (US); CROOK, James Michael Arthur, Austin, Texas, 78725 (US)
(74) Representative: Bryn-Jacobsen, Caelia

(57) **Abstract**

An example vehicle wing assembly includes a multi-element wing with a main wing element and a leading edge slat element. A deployment mechanism moves the wing between a stowed position where the main wing element blends with a vehicle body panel and the slat element is concealed, and an active deployed position away from a vehicle. A rotation mechanism adjusts the wing's angle of attack when deployed. A controller dynamically controls deployment and rotation based on vehicle operating parameters. The wing assembly provides enhanced aerodynamic performance while maintaining vehicle styling and incorporating safety features for impact protection.

## Description

### TECHNICAL FIELD

The present disclosures relate to vehicle aerodynamic systems and, in some examples, to deployable, active multi-element wing assemblies for transforming between stowed, low-drag, and high-downforce vehicle states. Some wing assembly examples include safety features for pedestrian or cyclist protection, and to enable rapid wing retraction upon rear collision detection.

### BACKGROUND

Vehicle aerodynamics often involve complex tradeoffs between styling, performance, and efficiency. Deployable aerodynamic elements allow vehicles to adapt their aerodynamic characteristics based on operating conditions. Rear wings and spoilers can generate downforce to enhance vehicle stability and handling while also contributing to overall drag. Traditional fixed aerodynamic elements represent a compromise between competing requirements across different driving scenarios. Supercars typically employ basic deployable spoilers with limited adjustment capabilities. The integration of aerodynamic elements with vehicle styling presents ongoing engineering challenges, particularly in maintaining clean body lines while achieving desired performance targets.

### BRIEF DESCRIPTION OF THE DRAWINGS

Throughout the drawings, reference numbers may be re-used to indicate correspondence between referenced elements. The drawings are provided to illustrate examples of the subject matter described herein and not to limit the scope thereof.
**FIG. 1A** illustrates an example vehicle wing assembly in a stowed position showing partial concealment of the slat element and, when stowed, a flush fit of the multi-element wing with a rear vehicle (for example a deck lid), according to some examples.
**FIG. 1B** illustrates the vehicle wing assembly in a deployed position showing an example multi-element wing including a main wing element and a slat element, according to some examples.
**FIG. 1C** illustrates the vehicle wing assembly during deployment showing wing movement and rotation capabilities, according to some examples.
**FIG. 2A** illustrates a perspective view of a vehicle incorporating the wing assembly in a stowed configuration integrated with vehicle body panels, according to some examples.
**FIG. 2B** illustrates the vehicle with the wing assembly in a deployed configuration extending upward and rearward, according to some examples.
**FIG. 3A** illustrates the wing deployment mechanism including linear actuators in a stowed position, according to some examples.
**FIG. 3B** illustrates the wing deployment mechanism in a deployed position showing actuation components, according to some examples.
**FIG. 4A****-****FIG. 4C** illustrate sequential views of a linear rail deployment configuration using linear actuators, according to some examples.
**FIG. 5A****-****FIG. 5C** illustrate sequential views of a linear rail deployment configuration using rotary actuators and a lead screw, according to some examples.
**FIG. 6A****-****FIG. 6C** illustrate operation of an impact protection system showing wing retraction upon rear impact detection, according to some examples.
**FIG. 7A****-****FIG. 7E** illustrate progressive deployment views showing integration and concealment features, according to some examples.
**FIG. 8A****-****FIG. 8C** illustrate detailed views of the wing assembly's integration with vehicle structure, according to some examples.
**FIG. 9A****-****FIG. 9C** illustrate configurations enabling continuous adjustment of the wing's angle of attack, according to some examples.
**FIG. 10** illustrates example operations in a method for controlling deployment and operation of a multi-element vehicle wing, according to some examples.

### DETAILED DESCRIPTION

As mentioned above, vehicle aerodynamic systems face inherent challenges in balancing multiple performance requirements. Modern vehicles require sophisticated aerodynamic management to achieve optimal performance across varying operating conditions. Aerodynamic elements address competing demands between maintaining clean body styling and generating necessary downforce. Vehicle surfaces that enhance aerodynamic performance often conflict with aesthetic design goals and overall vehicle efficiency. The integration of active aerodynamic components presents engineering complexities in packaging, actuation, and control. Modern active aerodynamic systems must balance multiple competing performance requirements including top speed, braking performance, cornering capability, and aerodynamic drag for efficiency purposes. The integration of active aerodynamic components presents unique engineering opportunities in electric vehicle platforms, where the absence of traditional internal combustion engine packaging constraints allows for different or more flexible placement of aerodynamic elements.

Vehicle stability and handling characteristics often depend on precise management of aerodynamic forces. The generation of downforce for enhanced performance often needs to be balanced against drag reduction for efficiency. This balance becomes particularly challenging when designing systems that must function across a range of operating conditions and vehicle speeds.

Safety considerations introduce additional complexity to aerodynamic system design. Deployable aerodynamic elements must maintain structural integrity while incorporating protection mechanisms for various impact scenarios. The integration of safety features typically involves careful consideration of mechanical design and control system implementation.

In some examples herein, a deployable and active rear wing system transforms between road and track configurations. Example systems incorporate a multi-element wing design including a main wing element and leading edge slat that work in concert to optimize airflow characteristics when deployed. In a stowed configuration, the wing assembly integrates with a vehicle's body panels, with the slat element concealed under the rear panel and the main wing element incorporating a step feature to blend with the deck lid surface. These examples seek to maintain clean body styling while enabling high-performance capabilities. In some examples herein, a deployable and active rear wing system transforms between stowed and deployed configurations while maintaining vehicle styling and safety. In some examples, the wing system can be deployed or stowed based on various operating conditions, independent of whether the vehicle is being operated on public roads or closed circuits.

While the examples described herein detail a multi-element wing configuration with both a main wing element and a leading-edge slat element, the deployment mechanisms, rotation capabilities, and safety features disclosed may be equally applicable to vehicle wing assemblies incorporating a single wing element. For example, the four-bar linkage system, linear rail configuration, or rotary actuator system described below may be used to deploy and actively control the position and angle of attack of a single airfoil wing element that transitions between a stowed position blending with the vehicle body and a deployed position for enhanced aerodynamic performance. Similarly, the non-back-drivable actuation systems, impact protection features, and sophisticated control capabilities may be implemented with single element wing designs while maintaining the benefits of rapid deployment, precise position control, and safety functionality. The wing controller may dynamically adjust a single wing element through multiple operating modes and positions based on vehicle parameters, just as described for the multi-element configuration.

Example deployment mechanisms are disclosed. Some examples utilize sophisticated actuation systems, with three possible configurations in some examples: a 4-bar linkage system using linear actuators, a linear rail design with pinned linkages, or a rotary actuator system with lead screws. Each configuration enables both wing deployment and wing rotation functions through concealed actuators allowing, in some examples, transition times under three seconds for deployment and less than quarter of a second for rotation adjustments.

In some examples, a multi-element wing configuration seeks to provide enhanced aerodynamic performance through precise positioning of the slat element 3-15mm from the main wing element when deployed. This configuration enables high-angle deployment while maintaining vehicle-attached airflow, generating significant downforce without compromising drag characteristics. In some examples, the system provides measurable performance impacts, with deployment effects of +350cts Cd and -1000cts Cl, and rotation effects of -250cts Cd in the deployed state.

In some examples, safety features are integrated into a wing assembly through an impact protection system that enables wing retraction upon rear collision detection. Example mechanisms retract until the wing assembly aligns flush with a rear of the vehicle, protecting both the system and potential impacting objects while maintaining structural integrity.

In some examples, the impact protection system incorporates a passive mechanical retraction mechanism that enables the wing to retract automatically upon experiencing a rear impact, without requiring active sensing or electronic control. The system includes mechanical latching mechanisms designed to release when subjected to a predetermined impact force threshold, allowing controlled passive retraction of the wing assembly.

The passive retraction system incorporates mechanical elements that maintain the wing's deployed position during normal operation while being configured to unlatch when experiencing impact forces exceeding specified thresholds. Upon unlatching, the wing assembly is designed to retract in a controlled manner through mechanical guides and dampeners that ensure the wing moves safely to a protected position. This passive system provides an additional layer of safety redundancy that functions independently of the vehicle's electronic and sensor systems, in some examples.

When implementing passive retraction capabilities, the wing deployment mechanism incorporates mechanical features that enable both powered deployment/retraction during normal operation and passive retraction during impact scenarios. The mechanical system is calibrated to prevent unwanted retraction from normal aerodynamic loads while ensuring reliable release and retraction when subjected to impact forces. This dual-mode capability allows the wing assembly to maintain its active functionality during normal operation while incorporating passive safety features.

In some examples, the impact protection system integrates with the vehicle's autonomous driving capabilities and predictive collision detection systems. Since wing retraction requires a finite time period, the system utilizes predictive collision algorithms to initiate retraction before an anticipated impact occurs. This creates a complex decision matrix balancing vehicle stability (which may be affected by wing position changes) against safety considerations in potential collision scenarios. The controller dynamically evaluates these tradeoffs based on collision probability, time-to-impact, vehicle dynamics, and other operating parameters to determine optimal wing positioning.

In some examples, the wing control system is integrated with the vehicle's autonomous driving capabilities to enable predictive control and safety features. The wing controller receives data from the vehicle's autonomous driving sensor suite, including cameras, radar, and lidar systems, which provide comprehensive environmental awareness and predictive collision detection capabilities. This sensor fusion approach enables the wing controller to anticipate changes in vehicle dynamics and potential safety scenarios before they occur.

The integration allows for complex decision-making that balances multiple competing priorities. When the autonomous systems detect a potential collision scenario, the wing controller evaluates factors including collision probability and time-to-impact, current vehicle stability requirements, wing deployment state and retraction time, vehicle dynamic conditions including speed, acceleration, and cornering forces, and driver inputs such as steering angle and brake actuation. Based on this integrated data analysis, the wing controller can initiate proactive responses such as partial wing retraction or position adjustment while maintaining vehicle stability.

For example, if the autonomous systems predict a potential rear collision with sufficient warning time, the controller can begin wing retraction while accounting for the temporary changes in vehicle aerodynamic balance. This predictive capability is particularly important since full wing retraction requires a finite time period, necessitating early initiation of safety measures based on collision probability algorithms.

The autonomous driving integration also enables location-aware wing control, such as automatic deployment mode changes when arriving at specific locations or driving environments. The wing controller continuously processes the autonomous system's environmental classification data to optimize wing positioning based on current and anticipated driving conditions.

In some examples, the impact protection system incorporates multiple sensor types including proximity sensors, radar, cameras, and pressure sensors integrated into the rear structure of the vehicle. These sensors work in conjunction with the vehicle's autonomous driving and collision avoidance systems to detect and predict potential impacts. The sensor fusion approach enables both immediate detection of actual impacts and predictive detection of imminent collisions, allowing the system to initiate protective measures proactively.

In some examples, control systems enable sophisticated operation through multiple modes, including road, track, and DRS configurations. In some examples, a non-back-drivable actuation system maintains efficiency while providing precise control over wing position based on vehicle parameters including speed, acceleration, and driving mode. In some examples, a non-back-drivable characteristic or functionality means that the actuation system is configured so that external aerodynamic forces cannot drive the wing's position backward or cause unwanted movement when the wing is held in a specific position. This feature may serve to reduce power consumption since the actuators do not need to work constantly against aerodynamic loads to maintain the wing's position. In some examples, the actuation system is specifically designed with non-back-drivability to reduce power consumption when the wing is help in a specific position. In some examples, the actuation system incorporates non-back-drivable mechanisms that allow the wing to maintain its position without requiring constant power to the actuators. This means that once the wing is positioned, it can be held stationary in its deployed state or other positions without active power consumption, even while experiencing aerodynamic loads. While the wing structure may experience some degree of flex or movement due to extreme aerodynamic forces, the non-back-drivable feature of the actuation system prevents unwanted changes in the wing's set position. In some examples, a non-back-drivable mechanism allows a wing to assume a deployed but "inactive" mode, as opposed to a deployed and active mode, described further below, for example.

In some examples, the wing deployment mechanism enables rapid transition between stowed and deployed positions to meet varying vehicle performance requirements. The deployment time may vary based on the specific actuation system and operating conditions, with some examples achieving deployment in under three seconds. Other deployment times are possible depending on the implementation and vehicle requirements.

The spacing between the slat element and main wing element can be optimized based on aerodynamic analysis and testing to achieve desired performance characteristics. In some examples, this optimized spacing may be in a range of 3-15 millimeters, though other spacings are possible depending on the specific wing configuration and performance targets.

The actuation system may incorporate various powered actuators suitable for achieving the desired deployment and rotation capabilities. These may include, but are not limited to, electrical actuators, hydraulic systems, or other actuation mechanisms capable of providing controlled movement of the wing assembly while maintaining non-back-drivable characteristics.

The impact protection system can be configured to respond to various types of detected impacts or collision events. While some examples describe responses to rear impacts specifically, the protection features may be adapted to address impacts from multiple directions or scenarios while maintaining the core safety functionality of rapid wing retraction. The system may incorporate different types of sensors and detection mechanisms appropriate for the specific safety requirements.

The wing controller may dynamically adjust deployment timing, positions, and rotation angles based on comprehensive vehicle operating parameters rather than fixed thresholds. This allows for sophisticated control strategies that can be tuned and optimized for different vehicle configurations and use cases.

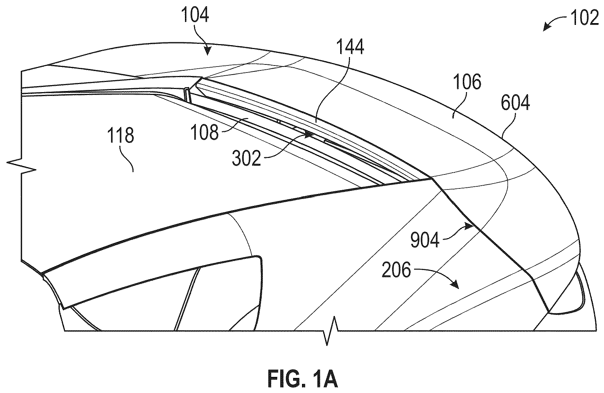

Turning now to the accompanying figures, **FIG. 1A** illustrates the vehicle wing assembly 102 in a stowed position showing partial concealment of the slat element and flush fit of the main wing element 106 with a rear vehicle panel 206 (for example a deck lid 904) of the vehicle, according to some examples. The main wing element 106 of the multi-element wing 104 has an aerodynamic leading edge 144. **FIG. 1A** shows the main wing element 106 blending with the vehicle deck lid 904 with the leading edge slat element 108 at least partially concealed under the deck lid in the stowed position.

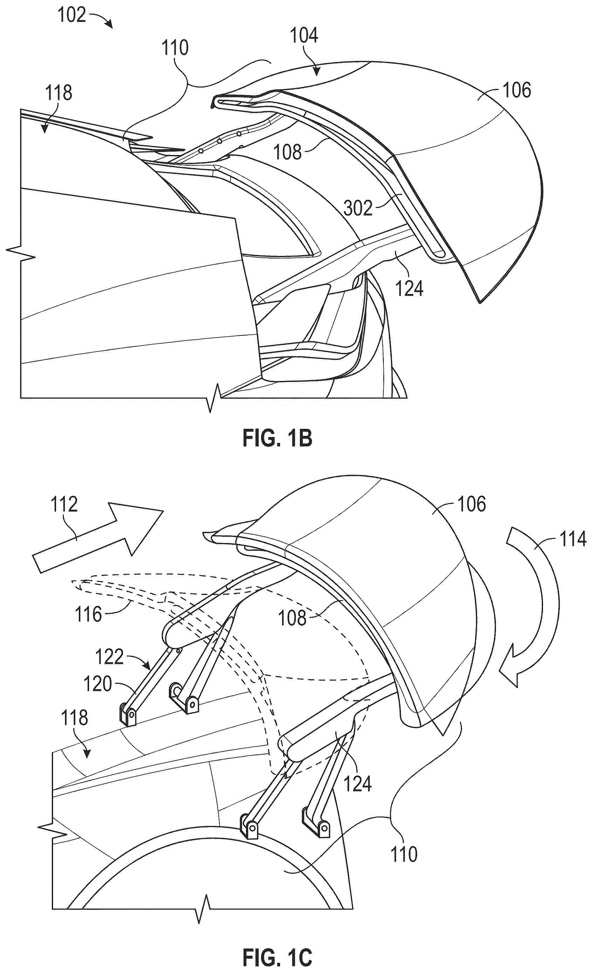

**FIGS. 1B-1C** generally illustrate a vehicle wing assembly 102 in example deployment positions. **FIG. 1C** demonstrates wing deployment and rotation motions using arrows to indicate, for example, the upward and rearward of the vehicle wing assembly 102 when deployed, and further, for example, the "active" bidirectional rotational movement of the multi-element wing 104 when deployed.

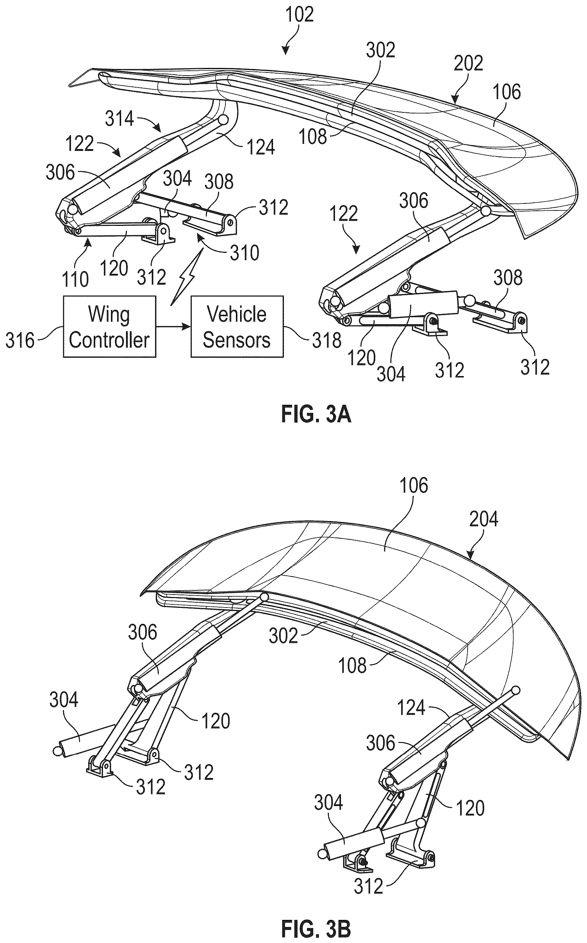

With reference again to **FIG. 1A****,** an example vehicle wing assembly 102 for a vehicle 118 includes a multi-element wing 104 comprising a main wing element 106 and a front slat element 108. In some examples, the multi-element wing 104 simply is referred to as a "wing" below. In some examples, the slat element 108 is a separate aerodynamic foil positioned ahead, or upstream of passing airflow, of the main wing element 106. Further details of the slat element 108 are provided below. In some examples, an air guidance gap 302 (also see **FIG. 3A**) is provided between the slat element 108 and the main wing element 106 to guide air flow. In some examples, the slat element 108 itself defines, or includes within its structure, one or more air guidance gaps 302.

The vehicle wing assembly 102 further comprises a wing deployment mechanism, shown generally at wing deployment mechanism 110 in the illustrated examples of **FIG. 1B** and **FIG. 1C****.** Other wing deployment mechanisms 110 are possible. In the more open view of **FIG. 1C** for example, the wing deployment mechanism 110 will be seen to comprise a four-bar linkage system 122 that includes one or more first links 120 and wing support arms 124 as shown. The first links 120 and wing support arms 124 may form part of a four-bar linkage system 122 described further below. Other linkage systems are possible. In some examples, the four-bar linkage system 122 moves the multi-element wing 104 in a rearward and upward wing deployment direction 112. Other deployment directions of the multi-element wing 104 are possible.

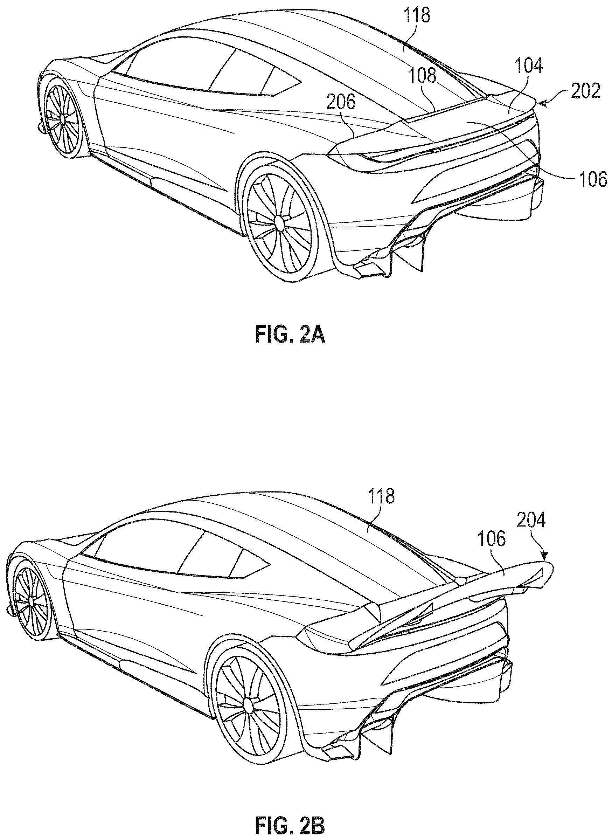

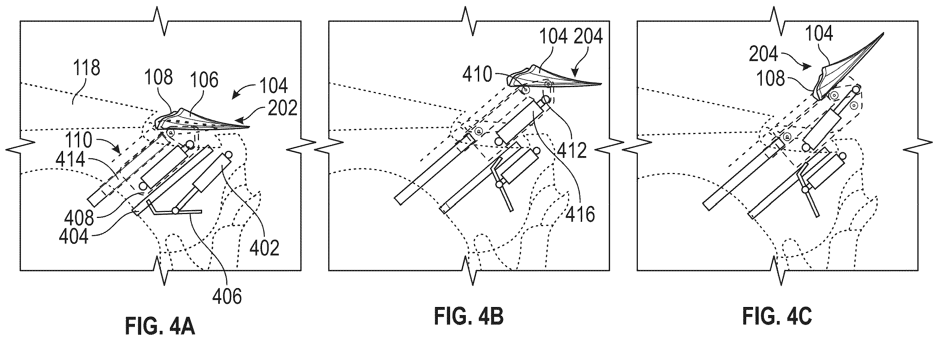

The multi-element wing 104 shown in the views of **FIG. 1B** and **FIG. 1C** is in a deployed position. As further examples of a deployed wing position, see for example the deployed position 204 of **FIG. 2B****,** or the non-rotated deployed position 204 of **FIG. 4B****,** or the wing-rotated deployed position 204 of **FIG. 4C** for example.

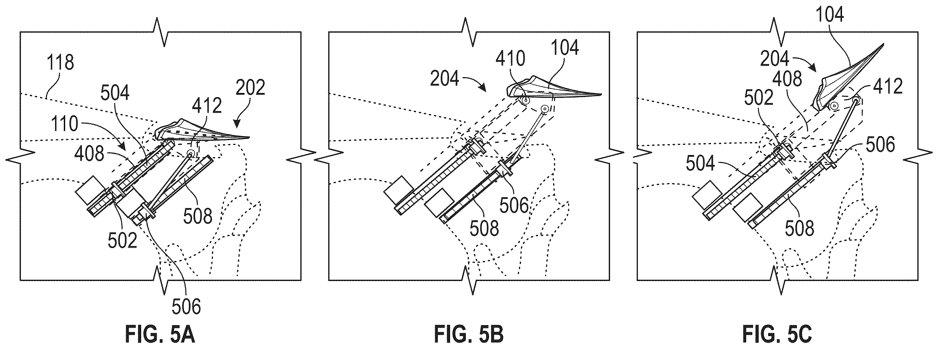

Notably in some examples, the multi-element wing 104 is "active" in the deployed position 204. In an active deployed position 204, the multi-element wing 104 can rotate to guide airflow, or reduce or increase downforce. In some examples, the multi-element wing 104 can rotate (or reciprocate) under guidance of a controller in a wing rotation direction 114, or opposite rotational wing direction. In some examples, the multi-element wing 104 can adopt generally horizontal and generally inclined positions to guide airflow and reduce or generate significant downforce. In some examples, in an active deployed position, the multi-element wing 104 is located or displaced into airstreams away from the vehicle in which a rotation mechanism (see **FIG. 4A** to **FIG. 4C****,** or **FIG. 5A** to **FIG. 5C****,** discussed below for example) is configured to adjust an angle of attack of the multi-element wing 104 actively to guide airflow and reduce or generate significant downforce when in the active deployed position. In some examples, the multi-element wing can generate 0kg of downforce in DRS mode, and up to 700kg of downforce in high downforce mode at top speed (for example at vehicle speeds in excess of 100 mph). In some examples, the multi-element wing is configured to generate a downforce in a range of 400-700 kg when deployed.

In some examples, the wing assembly incorporates coordinated rotation during the deployment sequence to maintain seamless integration with the vehicle body. As the wing begins its deployment motion, the main wing element rotates slightly at the bottom of its stroke to ensure proper clearance and alignment with the body panels. This coordinated motion enables the clean aesthetic integration in the stowed position while allowing full range of motion during deployment.

In some examples, an "active" wing specifically refers to a wing that can dynamically rotate or adjust its angle of attack while in a deployed position to modify aerodynamic characteristics. In some examples, a deployed wing is simply extended from its stowed position, while an active wing has additional capabilities when deployed. For example, in an active deployed position, the multi-element wing 104 is located or displaced into airstreams away from the vehicle in which a rotation mechanism is configured to adjust an angle of attack of the multi-element wing 104 actively to guide airflow and reduce or generate significant downforce when in the active deployed position.

In some examples, an active wing enables continuous adjustment through multiple positions, for example it can rotate between different aerodynamic configurations (DRS, high downforce, intermediate positions), and/or the wing rotation mechanism allows continuous adjustment of the wing's angle of attack when deployed.

In some examples, an active functionality includes a dynamic response to vehicle parameters, such as the wing controller may dynamically adjust deployment timing, positions, and rotation angles based on comprehensive vehicle operating parameters rather than fixed thresholds. In some examples, the wing controller actively modulates wing position and angle based on real-time vehicle dynamics, including speed, acceleration, and cornering forces. While deployable wings are sometimes called "active" in industry parlance, the example systems and controllers described herein provides additional active functionality beyond mere deployment through its continuous rotation and dynamic adjustment capabilities while in the deployed state.

In some examples, a controller is configured to control the wing deployment mechanism 110 and the rotation mechanism dynamically to adjust drag and downforce based on one or more vehicle operating parameters. In some examples, a vehicle operating parameter includes at least one of a vehicle speed, acceleration, location, or driving mode. These actions and parameters are also described further below. In between the stowed position 202 (**FIG. 2A**) and the deployed position 204 (**FIG**. **2B**), the multi-element wing 104 may adopt one or more intermediate wing positions 116 (**FIG. 1B**), described further below. The vehicle sensors may include steering angle sensors, brake actuation sensors, accelerator position sensors, and other driver input detection systems. Additionally, the wing controller can utilize data from the vehicle's autonomous driving sensor suite, including cameras, radar, and lidar systems, to anticipate changes in vehicle dynamics and proactively adjust wing positioning.

In an active deployed mode or deployed position 204, the vehicle may be said to be in "track" mode, as opposed to a "road" mode in which the multi-element wing 104 sits in a stowed position 202 where it nests into the overall profile of the vehicle 118 for a clean appearance. As further examples of a stowed position 202, see for example the stowed position 202 of the multi-element wing 104 in **FIG. 2A****,** or the stowed position 202 of the multi-element wing 104 in **FIG. 4A****,** or **FIG. 5A****.** As mentioned above, a wing can be deployed or stowed independently of the "type" of road or track the vehicle is travelling on. In some examples, a wing can be deployed or stowed or instructed to assume an intermediate position based on a manual selection by a driver, for example. In some examples, a wing can be deployed or stowed or instructed to assume an intermediate position automatically based on a machine-sensed parameter, such as a road surface, a road or route identification, or a driving location, for example.

Using this road and track terminology, the multi-element wing 104 or vehicle 118 of **FIG. 4A** **or** **FIG. 5A** (for example) may be said to be in a "road" mode, whereas the multi-element wing 104 or vehicle 118 of **FIG. 4B** **or** **FIG. 5B** may be said to be in "track DRS" (drag reduction system) mode, and the multi-element wing 104 or vehicle 118 of **FIG. 4C** **or** **FIG. 5C** may be said to be in a "track Hi-DF" (high downforce) mode. A high downforce mode may be adopted to improve vehicle tire grip in tight or fast corners for example, and/or utilized under vehicle braking conditions.

**FIG. 2A** and **FIG. 2B** generally show perspective views of a vehicle 118 incorporating an example deployable vehicle wing assembly 102, with **FIG. 2A** depicting the vehicle wing assembly 102 in a stowed configuration integrated with vehicle body panels, and **FIG. 2B** showing the vehicle wing assembly 102 in a deployed configuration with the multi-element wing 104 extending upward and rearward from the vehicle 118.

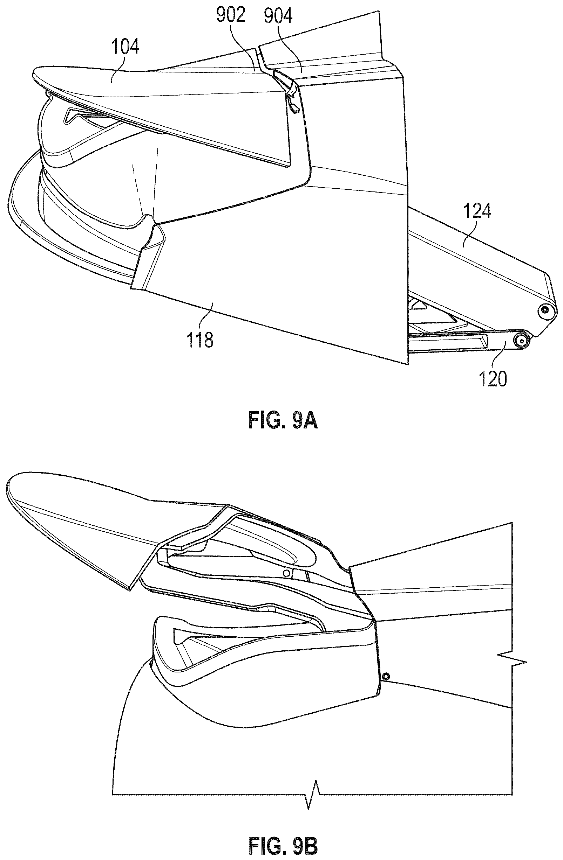

**FIG. 2A** shows multi-element wing 104 in a stowed position 202 where the main wing element 106 blends smoothly in profile with a rear panel 206 of vehicle 118 for a clean appearance in the road mode of the vehicle 118. In some examples, the front slat element 108 of the multi-element wing 104 is concealed under the rear panel 206 of the vehicle 118 in the stowed position 202 of the multi-element wing 104. In some examples, the rear panel 206 of the vehicle 118 includes or is constituted by a deck or rear trunk lid, as mentioned above. In some examples, the main wing element 106 incorporates a step feature to blend with the deck or rear trunk lid surface, for example as shown more clearly in **FIG. 9A** where an example step feature 902 is shown flush with an example deck lid 904 in the stowed position 202 of the multi-element wing 104 .

**FIG. 2B** illustrates a deployed position 204 where the multi-element wing 104 is positioned upward and rearward from the stowed position 202 to enhance aerodynamic performance. This deployment allows transformation between the road mode (stowed) and two main deployed track modes, such as track DRS, and track Hi-DF, in some examples.

**FIG. 3A** and **FIG. 3B** generally illustrate a wing deployment mechanism 110 for deploying and stowing a vehicle wing assembly 102. **FIG. 3A** shows an example wing deployment mechanism 110 that includes linear actuators in a stowed position, and **FIG. 3B** shows the wing deployment mechanism 110 in a deployed position. The figures illustrate how a linkage system can enable deployment in less than 3 seconds in some examples.

In some examples, for instance as shown, the wing deployment mechanism 110 comprises a pair of four-bar linkage systems 122. In some examples, one of the pair of four-bar linkage systems 122 may be considered a first or left four-bar linkage system 122, and the other of the pair of four-bar linkage systems 122 may be considered a right or second four-bar linkage system 122. In the illustrated case, a four-bar linkage system 122 is provided for each side of the vehicle wing assembly 102. Other numbers or configurations of a wing deployment mechanism 110 are possible, for example comprising a single four-bar linkage system 122 provided at a center of the vehicle wing assembly 102, or comprising three four-bar linkage systems 122 disposed along the length of the vehicle wing assembly 102, for example including a central four-bar linkage system 122 and two lateral four-bar linkage systems 122. Many configurations of a wing deployment mechanism 110 are possible.

In the illustrated example, each four-bar linkage system 122 comprises a first link 120, a second link 308, and a wing support arm 124 supporting the multi-element wing 104 rotatably, or "actively", in the vehicle wing assembly 102. The first link 120 and the second link 308 are pivotally attached to and supported on a vehicle chassis or frame (shown generally by a supporting area of the vehicle frame 310 for example) by means of linkage support elements 312. The first link 120 and the second link 308 are pivotally attached to the wing support arm 124 and, together with the vehicle frame 310, these four elements (first link 120, second link 308, wing support arm 124, and vehicle frame 310) form a four-bar linkage geometry.

Each four-bar linkage system 122 of the wing deployment mechanism 110 further comprises a first deployment actuator 304 that controls linear forward (stowing) and rearward (deployment) movement of its respective four-bar linkage system 122 between the stowed position 202 and the deployed position 204. An extended position of the first deployment actuators 304 can be seen in **FIG. 3B****,** for example, in the deployed position 204 of the vehicle wing assembly 102. The first deployment actuators 304 are retracted in the stowed position 202 of **FIG. 3A****.**

A wing rotation mechanism shown for example generally at wing rotation mechanism 314 includes a pair of second rotation actuators 306, each concealed within a respective wing support arm 124 for wing angle adjustment. The second rotation actuators 306 can actively and dynamically control rotation of the multi-element wing 104 in the active deployed position 204 of the vehicle wing assembly 102. In a "horizontal" (low drag, or Drag Reduction System [DRS]) orientation of the multi-element wing 104, for example as shown in **FIG. 3A****,** the second rotation actuators 306 adopt a relatively retracted configuration, but can be extended adjustably in tandem to rotate the multi-element wing 104 in increments or in a full movement to adopt a "high downforce" configuration shown in **FIG. 3B****.** An air guidance gap 302 is maintained between the slat element 108 and main wing element 106 during rotation.

In some examples, the wing deployment mechanism 110 enables deployment in less than 3 seconds using the paired sets of first deployment actuators 304 and second rotation actuators 306. In some examples, the first deployment actuator 304 and/or the second rotation actuator 306 are fast-acting electrically powered actuators. In some examples, the first deployment actuator 304 and/or the second rotation actuator 306 include hydraulic rams. Non-back-drivable actuation is provided in some examples to reduce power consumption when holding position, for example in a deployed position 204 (low drag, or high downforce) on an intermediate wing position 116 between the stowed position 202 and the deployed position 204 of the vehicle wing assembly 102. In some examples, precise positioning of the slat element 108 is maintained at 3-15 mm from the main wing element 106 when deployed. A full range of angular motion for tuning drag and downforce is provided based on vehicle parameters. In some examples, the wing deployment mechanism 110 allows the multi-element wing 104 to transform between a stowed position where it integrates with vehicle styling, a deployed position enabling high-performance aerodynamic capabilities, and multiple intermediate positions for aerodynamic balance adjustment.

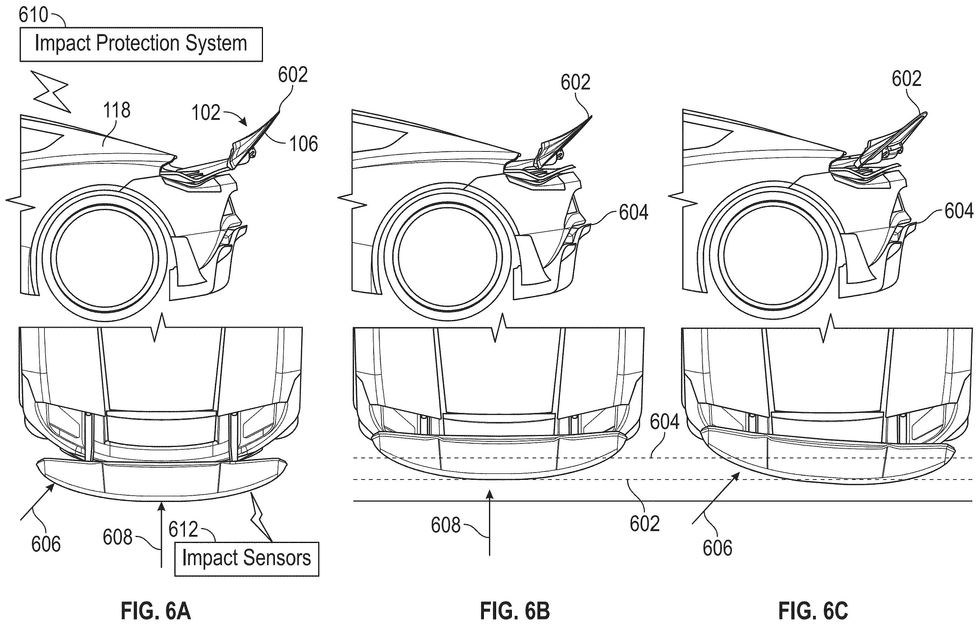

In further example aspects, the multi-element wing 104 deploys rearward further than existing vehicles which, in combination with the multi-element airfoil shape of some examples, may significantly enhance airflow around the wing for better overall downforce and performance. In some examples, the multi-element wing 104 or at least the main wing element 106 of the vehicle wing assembly 102 is held fully clear of the rear of the vehicle 118 at least when fully deployed. To counteract the potential downsides of having a rear wing extending so far out, there is also provision in some examples for the wing to retract upon a rear impact from a cyclist or motorcyclist, thus minimizing the risk of damage or injury. Some examples of these safety features are described further below with reference to FIG. 6A - FIG. 6C**.** This large range of deployment is enabled through an efficient and leveraged four-bar linkage system that uses integrated fast-acting actuators to achieve full deployment from full stowage (and the reverse direction) in less than 3 seconds, in some examples. The fast-acting characteristics of the wing deployment mechanisms 110 described herein also facilitate immediate wing retraction in the event of an impact, as described further below.

The leading edge slat element 108 is notable in some examples in that it enables very high incidence of deployment, enabling much higher downforce levels. In some examples, the slat element 108 is hidden from view under a rear fender or body panel when the multi-element wing 104 is stowed, further reducing visible split lines and helping to keep a clean car look in road mode. The size and position of the slat element 108 may be helpful in some examples both in improving high downforce, but also *not* contributing to drag in DRS mode enabling a single body rotation of the wing assembly as a whole helping to keep the vehicle wing assembly 102 and wing deployment mechanism 110 simple, reducing cost and weight.

A further aspect of some examples of the deployable rear wing is that upon deployment, the wing has a fully active range of angular motion enabling tuning of drag, downforce and aerodynamic balance based on parameters such as vehicle speed, acceleration, location, driving mode, and more. In-house compact high-speed actuators hidden inside the wing support arms allow a full range of rotation in less than ¼ (one quarter) of a second to enhance performance and aerobraking.

A further aspect of some examples is that the wing can also partially deploy and rotate to enable front to rear balance adjustment in road mode, while keeping most of the closed smooth styling. The impact of going from stowed to deployed states is +350cts Cd and -1000cts Cl. Once deployed, the effect of rotation (from high downforce to low drag) is -250cts Cd (drag coefficient) for - 700 cts Cl (lift coefficient). In some examples, these aerodynamic effects may be very significant allowing for a vehicle to transform radically from road to track modes, while addressing a number of key tradeoffs for the vehicle including high downforce, low drag, and aerodynamic balance.

With reference again to **FIG. 3A****,** in some examples a wing controller 316 is configured to dynamically control both the wing deployment mechanism 110 and the wing rotation mechanism 314 based on multiple vehicle operating parameters detected by an integrated sensor system. The integrated sensor system may include one or more vehicle sensors 318. In some examples, the vehicle sensors 318 may include speed sensors monitoring vehicle velocity, accelerometers detecting vehicle acceleration and deceleration, GPS sensors tracking vehicle location and driving conditions, and mode selection sensors detecting driver-selected operating modes.

In a road mode operation, the wing controller 316 maintains the multi-element wing 104 in the stowed position 202 for optimal aerodynamic efficiency during normal driving. When vehicle speed exceeds a predetermined threshold, such as during highway driving, the wing controller 316 can partially deploy the multi-element wing 104 to an intermediate wing position 116 to enhance vehicle stability while maintaining relatively low drag. The wing deployment mechanism 110 achieves this through precise actuation of the four-bar linkage system 122 or linear rail system to raise the multi-element wing 104 (or vehicle wing assembly 102) to a specific height.

In a track mode operation, the wing controller 316 can actively modulate wing position and angle based on real-time vehicle dynamics. For example, during straight-line acceleration, the wing controller 316 commands the wing rotation mechanism 314 to adjust the multi-element wing 104 to a low-drag DRS configuration by rotating to a generally horizontal orientation. This provides a measurable reduction in drag coefficient of approximately -250 counts. When braking is detected or during high-speed cornering, the wing controller 316 rapidly rotates the multi-element wing 104 to a high-downforce position, generating significant negative lift to enhance vehicle stability.

In some examples, the wing controller 316 enables sophisticated features like automatic deployment based on GPS location, such as activating track mode when arriving at a racing circuit. The non-back-drivable actuation system maintains precise wing positions while minimizing power consumption. In some examples, the wing controller 316 can transition between modes in under 3 seconds for deployment and under 0.25 seconds for rotation adjustments.

**FIG. 4A****-****FIG. 4C** and **FIG. 5A****-****FIG. 5C** generally show sequential views of alternative wing deployment mechanisms. **FIG. 4A****-****FIG. 4C** illustrate an active rear wing that incorporates a linear deployment configuration and linear actuators, while **FIG. 5A****-****FIG. 5C** illustrate a linear deployment configuration and rotary actuators. Both configurations enable both deployment and rotation functions through concealed actuators. In both systems, wing deployment and wing rotation can occur simultaneously or independently of each other.

**In** **FIG. 4A****,** the multi-element wing 104 is in a stowed, clean profile position. The wing deployment mechanism 110 includes a deployment linear actuator 402 arranged to act on a first linear rail 404 via a pinned linkage 406. The multi-element wing 104 is connected to and supported on the first linear rail 404 by a movable first frame 408 or linear carriage, shown in dotted outline. A second linear rail 414 may also support, guide, or reinforce the linear movement of the first frame 408 between the stowed position 202 and deployed position 204 of the multi-element wing 104.

In **FIG. 4A****,** the deployment linear actuator 402 is extended, holding the multi-element wing 104 in the stowed position. When the deployment linear actuator 402 is retracted, the first frame 408 and the multi-element wing 104 move upwardly and rearwardly, for example to a position as shown in **FIG. 4B****.** The retraction of the deployment linear actuator 402 may be very quick (for example less than 3 seconds, or less than 1 second in some examples), and the outward deployment of the multi-element wing 104 may be very rapid, accordingly. In the illustrated example of **FIG. 4B****,** the multi-element wing 104 is in a deployed, low drag (or DRS) position. Extension of the deployment linear actuator 402 can move the multi-element wing 104 rapidly back to the stowed position 202 of **FIG. 4A****,** or an intermediate wing position 116 therebetween.

It will also be seen in **FIG. 4B** that the multi-element wing 104 is rotatably connected at pivot 410 to a second frame 412 or rotatable carriage, shown in dotted outline. The pivot 410 may be provided at the upper end of the second linear rail 414, but other configurations are possible. A rotation actuator 416 is arranged to act on the second frame 412. In some examples, the rotation actuator 416 is hidden inside a wing support structure, such as a wing support arm 124 described further above, or the first frame 408 mentioned just above. Other concealment structures of the deployment linear actuator 402 and the rotation actuator 416 are possible. The arrangement is such that extension of the rotation actuator 416 rotates the rear or trailing edge of the multi-element wing 104 upwardly, for example into a position shown in **FIG. 4C****.** Here, the multi-element wing 104 is brought into a high angle of incidence (or impingement) with the airflow passing over the vehicle 118 to generate a high degree of downforce. The degree of downforce can be actively adjusted by controlling the angle of incidence of the multi-element wing 104. In the illustrated example of **FIG. 4C****,** the multi-element wing 104 may be said to be in a deployed, high downforce (or Hi-DF) position, but other intermediate positions are possible, for example at an intermediate wing position 116 described above.

Retraction of the rotation actuator 416 can rotate the multi-element wing 104 rapidly back to the position of **FIG. 4B****,** or an intermediate wing position 116. Full or incremental extensions or retractions of the rotation actuator 416 may be very quick (for example less than 1 second, or ¼ of a second in some examples) with the dynamic rotational adjustment of the multi-element wing 104 being effected almost instantaneously, or at least very rapidly, in some examples.

In **FIG. 5A****,** the example wing deployment mechanism 110 illustrated here includes a first rotary actuator 502 acting on a first lead screw 504, and a second rotary actuator 506 acting on a second lead screw 508. As before, the multi-element wing 104 is supported movably and rotatably on a first frame 408 (linear carriage) and a second frame 412 (rotatable carriage) at a pivot 410. Simultaneous and parallel activation of the first rotary actuator 502 acting on the first lead screw 504, and the second rotary actuator 506 on the second lead screw 508, deploys the multi-element wing 104 rearwardly and upwardly towards and into the position of **FIG. 5B** (for example a fully deployed, low drag or DRS position). Intermediate wing positions are also possible. Activation of the first rotary actuator 502 and the second rotary actuator 506 in the opposite direction causes the multi-element wing 104 to retract downwardly and forwardly relative to the vehicle 118 into the stowed position of **FIG. 5A** for example, or an intermediate wing position.

In **FIG. 5B****,** further activation and upward movement by the second rotary actuator 506 along the second lead screw 508 causes the multi-element wing 104 supported on the rotatable second frame 412 to rotate about the pivot 410 and adopt a position for example shown in **FIG. 5C** (fully deployed, high downforce), or an intermediate wing position. Downward movement by the second rotary actuator 506 along the second lead screw 508 causes the multi-element wing 104 to rotate in the opposite direction and re-adopt the level (horizontal, low, or zero angle of incidence) configuration of **FIG. 5B** or **FIG. 5A****,** for example.

In some examples, any one of, some, or all of the first rotary actuator 502, the first lead screw 504, the second rotary actuator 506, and the second lead screw 508 is concealed inside a wing support structure, such as a wing support arm 124 described above, or the first frame 408 or the second frame 412 mentioned just above. Other concealment structures are possible.

The reciprocal upward and downward movement of the first rotary actuator 502 and/or the second rotary actuator 506 along their respective lead screws may be very quick. In some examples, a full descent or full ascent along a lead screw may occur in less than 3 seconds, or less than 1 second in some examples.

**FIG. 6A****-****FIG. 6C** generally illustrate aspects of an example impact protection system 610 for a vehicle wing assembly 102, showing an example wing retraction sequence upon detecting a rear impact. The figures demonstrate how the vehicle wing assembly 102 retracts in some examples until a trailing edge 602 of the multi-element wing 104 (or main wing element 106) is rapidly retracted to be aligned generally flush with a rearmost profile 604 (e.g., a rearmost extremity or point) of a rear panel or rear structure of the vehicle 118 in response to both central (**FIG. 6B**) and corner (**FIG. 6C**) impacts. The immediate retraction to an intermediate "safety zone" no further outboard than the rearmost profile 604 of the vehicle 118 can potentially minimize danger time and harm to a pedestrian or cyclist, as compared to a full retraction of the vehicle wing assembly 102.

In **FIG. 6A****,** the vehicle wing assembly 102 is in a fully deployed, high downforce position. A side rear impact 606 or center rear impact 608 may be detected. In the event of a center rear impact 608, the vehicle wing assembly 102 retracts in a rearward direction (shown in **FIG. 6B**) as shown with the multi-element wing 104 maintained in a straight or un-inclined lateral direction until the dotted lines representing the trailing edge 602 of the multi-element wing 104 and the rearmost profile 604 of the vehicle 118 merge indicating the safety zone has been reached.

Similarly, in the event of a side rear impact 606, the vehicle wing assembly 102 retracts in a direction shown in **FIG. 6C** in a rearward direction as shown but here the multi-element wing 104 is immediately moved to inclined direction as shown until the dotted lines representing the trailing edge 602 (which may now be off-center of the multi-element wing 104) and the rearmost profile 604 of the vehicle 118 merge indicating the safety zone has been reached. Further or full retraction of the vehicle wing assembly 102 into the safety zone and/or a stowed position 202 is possible in some examples.

In some examples, the impact protection system 610 incorporates impact sensors 612 at the rear of the vehicle 118 to detect potential collision events. These impact sensors 612 may include proximity sensors, impact sensors, and pressure sensors integrated into the rear structure of the vehicle. Upon detecting an imminent or actual rear impact, whether centered or offset, the impact protection system 610 triggers an immediate emergency retraction sequence.

In response to impact detection in some examples, the impact protection system 610 communicates with the wing controller 316 to initiate rapid wing retraction using either the wing deployment mechanism 110 and/or the wing rotation mechanism 314. The impact protection system 610 is specifically designed in some examples to retract the vehicle wing assembly 102 until the trailing edge of the multi-element wing 104 aligns flush with the rearmost profile 604 of the vehicle's rear structure. This creates a safety zone that minimizes potential harm to pedestrians or cyclists in the event of a collision.

In some examples, the impact protection system 610 can respond differently based on the type and location of impact. For a centered rear impact, the wing retracts straight back while maintaining its lateral orientation. For an offset or side impact, the impact protection system 610 can retract the wing while simultaneously adjusting its angle to minimize exposure on the impacted side. The fast-acting actuators of the wing deployment mechanism 110 and/or the wing rotation mechanism 314 enable complete retraction to the safety position in a fraction of the normal deployment time.

In some examples, after the impact event concludes and safety conditions are confirmed, the impact protection system 610 maintains the vehicle wing assembly 102 in its retracted safety position until manually reset, ensuring the vehicle wing assembly 102 remains protected and does not pose additional risk. The impact protection system 610 maintains structural integrity of the vehicle wing assembly 102 while enabling rapid retraction for safety.

In some examples, the impact protection system utilizes a comprehensive sensor fusion approach for detecting and responding to potential rear impacts. The system incorporates multiple types of sensors including one or more of: proximity sensors integrated into the rear bumper and body panels, radar sensors providing detection of approaching objects and relative velocity, camera systems enabling visual detection and classification of potential impact threats, pressure sensors embedded in the rear structure for immediate impact detection, and integration with the vehicle's autonomous driving sensor suite.

In some examples, a sensor fusion system enables both reactive and predictive impact detection capabilities. For reactive detection, pressure sensors and impact sensors provide immediate detection of actual collision events. For predictive detection, the radar, camera, and proximity sensor data is processed through collision prediction algorithms to anticipate potential impacts before they occur. This predictive capability allows the system to initiate wing retraction proactively when a collision probability exceeds defined thresholds.

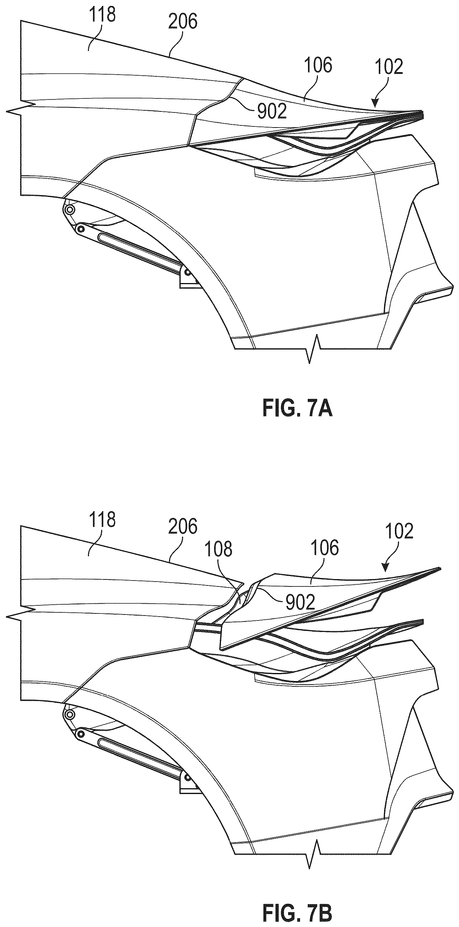

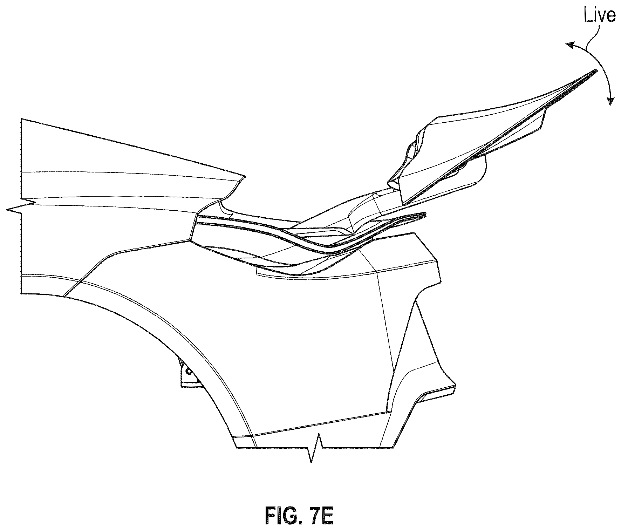

**FIG. 7A****-****FIG. 7E** generally show views of vehicle integration and concealment features of some examples of a vehicle wing assembly 102. The figures illustrate for example how the slat element 108 is hidden under the rear panel 206 when stowed. In the various views of the example vehicle wing assemblies 102 in this disclosure, one of more vehicle panels (not shown in the views for clarity) may conceal one or more underlying components of the wing deployment systems, such as actuators, rams, links and so forth. These vehicle panels may assist in maintaining a "smooth" or aerodynamic profile of the vehicle, especially in stowed positions of the vehicle wing assembly 102.

For example, in the stowed view of **FIG. 7A****,** the vehicle wing assembly 102 is fully stowed. While some linkages and components are visible in this example view, in real life one or more fixed or movable vehicle panels or doors may be provided such that no linkages or wing deployment mechanisms are visible when the vehicle wing assembly 102 is stowed. The outer profile of the vehicle remains smooth when the vehicle wing assembly 102 is stowed.

**In** **FIG. 7B****,** the partially deployed (or nearly stowed) intermediate position of this view shows the slat element 108 about to be nested, and concealed from view, under the rear panel 206 (for example a deck lid).

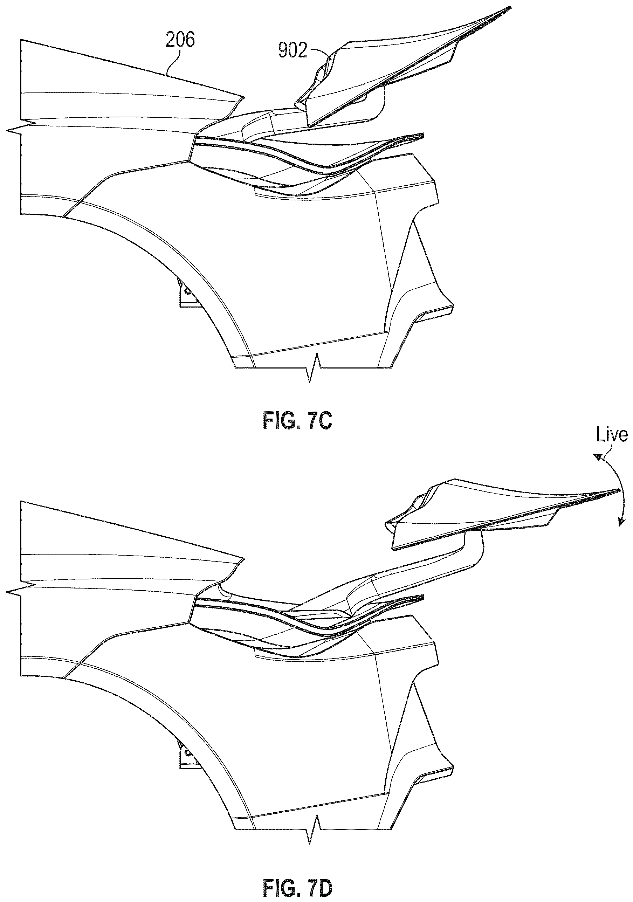

**FIG. 7C** also shows a step feature 902 in the main wing element 106 that enables seamless blending with the rear panel 206 (e.g., deck lid) in the stowed position, as well as the geometric relationship between the slat and main wing elements.

The views of **FIG. 7B****-****FIG. 7E** show example intermediate and fully deployed positions of the vehicle wing assembly 102. In some examples, a 3-15 mm gap of the slat element 108 from the main wing element is maintained when deployed for optimal aerodynamic performance. Other sizes of gap are possible, for example a gap size in a range of 1mm-30 mm. It will be noted how the multi-element wing 104 (or at least the main wing element 106) can be extended fully rearwardly of the vehicle 118 in some examples, and "actively" rotated when deployed (for example, see **FIGS. 7D-7E****)** to assume, for example, low drag or high downforce positions when deployed.

In some examples, **FIG. 7A****-****FIG. 7E** illustrate a progressive deployment sequence of the multi-element wing 104 as controlled by the wing controller 316 in response to vehicle operating parameters. **FIG. 7A** shows the nearly stowed configuration where the step feature 902 of the main wing element 106 aligns with the rear panel 206, while the slat element 108 remains concealed underneath, enabling a clean aesthetic in road mode operation.

**FIG. 7B****-****FIG. 7E** demonstrate the wing controller 316's dynamic deployment control as the wing transitions through intermediate positions. The wing controller 316 maintains precise positioning of the slat element 108 relative to the main wing element 106, preserving the 3-15 mm (or other size) air guidance gap that enables optimal aerodynamic performance. These figures also show how the wing controller 316 can pause deployment at various intermediate positions to provide partial downforce enhancement during highway driving while maintaining vehicle efficiency.

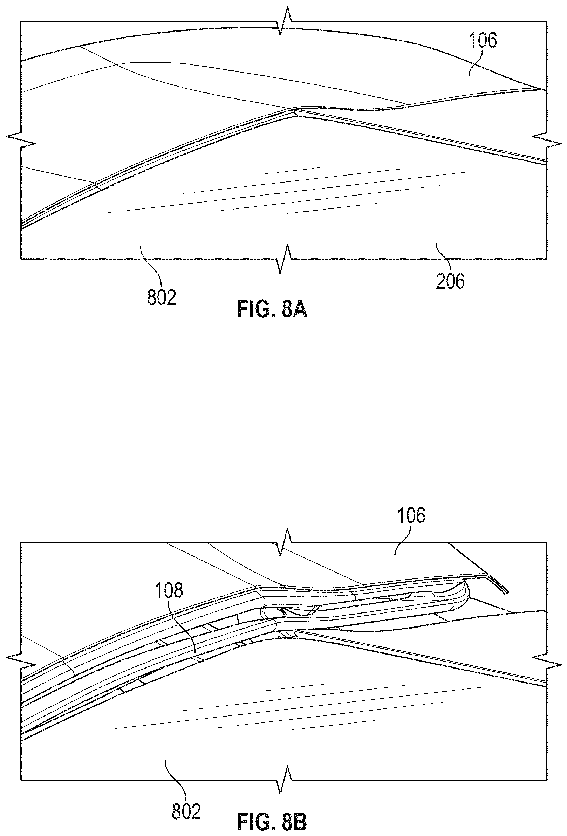

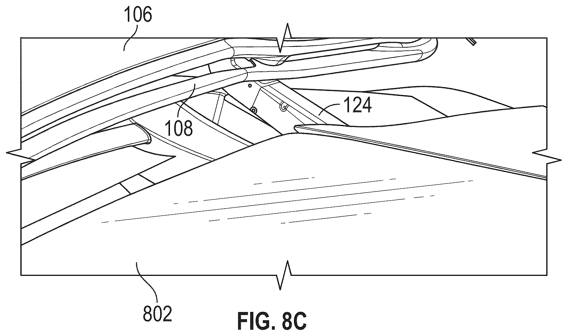

**FIG. 8A****-****FIG. 8C** provide detailed views of the wing assembly's integration with the vehicle structure and the concealment of actuation components. **FIG. 8A** highlights the orientation of the air guidance gap 302 between the main wing element 106 and slat element 108 that the wing controller 316 actively controls during deployment. **FIG. 8B** shows an intermediate deployment state where the wing controller 316 can modulate wing position based on real-time vehicle dynamics. **FIG. 8C** shows an example wing support arm 124 structure that houses concealed actuators used by the wing controller 316 for precise position control. In some examples, a liftgate glass 802 extends rearwardly substantially straight out to cover the leading edge 144 of the main wing element 106, and the leading slat element 108.

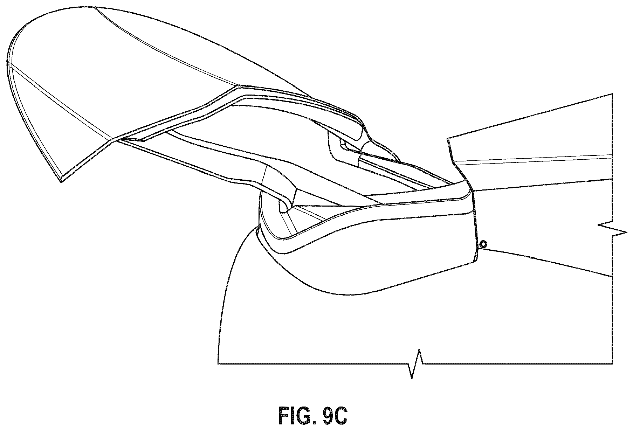

**FIG. 9A****-****FIG. 9C** generally illustrate configurations of the vehicle wing assembly 102 including a multi-element wing 104 controlled by a wing deployment mechanism 110 that enables continuous adjustment of the wing's angle of attack when deployed. The figures seek to show for example how actuators concealed within one or more wing support arms 124 can enable wing rotation in less than ¼ of a second for various operating modes including high downforce, drag reduction (DRS), and intermediate wing positions. In **FIG. 9A****,** a step feature 902 in the main wing element 106 aligns cleanly with a surface of a rear panel such as a deck lid 904, for example, when the vehicle wing assembly 102 is stowed. **FIG. 9B** and **FIG. 9C** demonstrate the wing controller 316's ability to rapidly adjust the wing angle between DRS (low drag) and high downforce configurations in track mode, with rotation completed in less than 0.25 seconds to optimize vehicle performance based on speed, acceleration, and driving conditions.

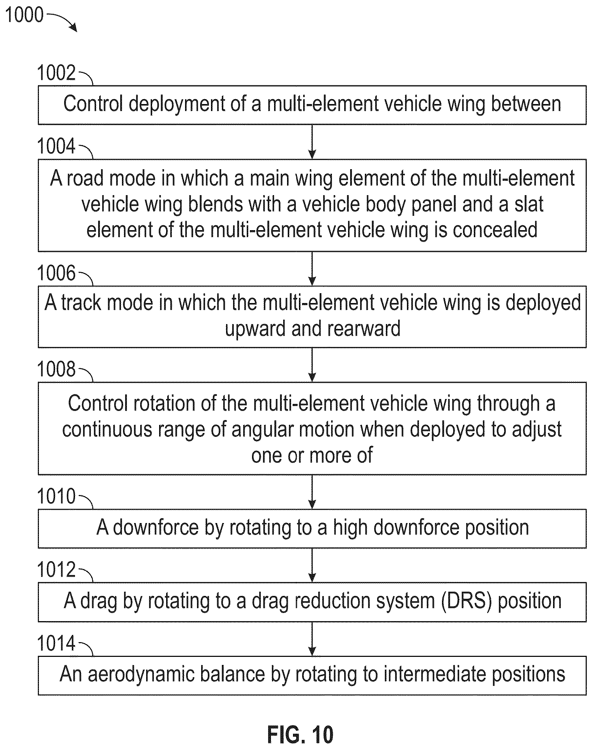

Some examples herein include methods. With reference to **FIG. 10****,** a method 1000 of controlling deployment of a multi-element vehicle wing is provided. In operation 1002, method 1000 controls deployment of a multi-element vehicle wing between: at operation 1004, a road mode in which a main wing element of the multi-element vehicle wing blends with a vehicle body panel and a slat element of the multi-element vehicle wing is concealed; and at operation 1006, a track mode in which the multi-element vehicle wing is deployed upward and rearward. In operation 1008, the method 1000 controls rotation of the multi-element vehicle wing through a continuous range of angular motion when deployed to adjust one or more of: at operation 1010, a downforce by rotating to a high downforce position or, at operation 1012, a drag by rotating to a drag reduction system (DRS) position or, at, operation 1014, an aerodynamic balance by rotating to an intermediate position.

The method 1000 may also include retracting the multi-element vehicle wing upon detecting a rear impact. The method 1000 may also include where controlling rotation in the track mode includes rotating the multi-element vehicle wing to achieve a change in drag coefficient of approximately -250 counts. Other technical features may be readily apparent to one skilled in the art from the following figures, descriptions, and claims.

### EXAMPLES

In some examples, the slat and main wing elements work together in a carefully engineered aerodynamic relationship. In high downforce mode, the slat helps turn the airflow, generating high suction peaks, while being aligned to the oncoming flow at high incidence before turning the flow aggressively. The slat is intentionally designed as a short element since the large amount of turning with a high adverse pressure gradient stresses the boundary layer along the slat element. The mainplane generates its own suction to support the boundary layer on the slat, making the geometric relationship between the mainplane and slat critical, typically requiring a 3mm to 15mm gap between the two elements.

In some examples, the multi-element wing system enables sophisticated aerodynamic modes. In DRS or low downforce mode, the entire wing assembly rotates nose-up, causing the gap between the slat and mainplane to become 'stalled', effectively neutralizing the slat's influence on the airflow. Between the high downforce and DRS modes, the aerodynamic effect varies proportionally, allowing a wide operating range of downforce, drag, and aerodynamic balance.

In some examples, the mainplane incorporates specific geometric features to enable seamless integration with the vehicle body. A small step is provided on the top side of the mainplane to allow it to interface with the rest of the car when in the stowed position. This step feature is carefully positioned to avoid disrupting airflow in the deployed high downforce state by being located in the stagnation area of the wing in the high downforce position.

In some examples, the geometric relationship between the slat element and main wing element is carefully optimized to achieve specific aerodynamic performance targets. In high downforce mode, the slat element helps turn the airflow, generating high suction peaks while the main wing element provides additional suction to support the boundary layer on the slat. This coordinated operation enables very high incidence angles while maintaining attached airflow. The spacing between elements is precisely set or controlled, typically maintained between 3-15 millimeters for optimal performance. In DRS or low downforce mode, the entire wing assembly rotates to a position where the gap between elements becomes effectively stalled, reducing the slat's influence on airflow and minimizing drag. In some examples, the wing assembly incorporates coordinated rotation during the deployment sequence to maintain seamless integration with the vehicle body. As the wing begins its deployment motion, the main wing element rotates slightly at the bottom of its stroke to ensure proper clearance and alignment with the body panels. This coordinated motion enables the clean aesthetic integration in the stowed position while allowing full range of motion during deployment.

In some examples, development of the wing assembly incorporates comprehensive testing and validation processes. Initial design optimization is conducted through extensive computational fluid dynamics (CFD) analysis, followed by wind tunnel testing at both model scale (50%) and full scale to validate performance characteristics. Testing methods include pressure tapping measurements and flow visualization techniques to understand detailed airflow behavior and verify aerodynamic performance metrics. The testing program demonstrates significant performance improvements, with deployment effects of +350cts Cd and -1000cts Cl, and rotation effects of -250cts Cd in the deployed state.

In some examples, the wing controller implements sophisticated control strategies that dynamically adjust wing position and angle based on comprehensive vehicle operating parameters. In road mode operation, the controller maintains the wing in its stowed position for optimal efficiency during normal driving, with capability for partial deployment to enhance stability during highway operation. In track mode, the controller actively modulates wing position and angle based on real-time vehicle dynamics, including speed, acceleration, and cornering forces. The system enables automatic deployment based on GPS location, such as activating track mode when arriving at a racing circuit. Multiple fail-safe mechanisms are incorporated to ensure safe operation, including rapid retraction capabilities for impact protection.

In some examples, the multi-element wing design presents unique manufacturing and integration challenges that require careful consideration. The step feature in the main wing element must be precisely manufactured to achieve seamless blending with the deck lid surface while maintaining optimal aerodynamic performance in deployed positions. The slat element requires coordinated motion with the main wing during deployment and stowage, necessitating precise mechanical integration. Support structures and actuation systems are designed for concealment within the vehicle body panels while maintaining necessary structural integrity and operational capabilities. Final integration includes refinement of the slat-to-mainplane relationship and optimization of support mount interfaces to minimize aerodynamic disruption.

In further example aspects, the vehicle wing assembly is specifically configured to work in conjunction with a rear diffuser system to enhance overall aerodynamic performance. The positioning of the multi-element wing at the rear of the diffuser, extending beyond the vehicle body, creates a low pressure region at the diffuser's trailing edge that helps accelerate airflow under the vehicle. This configuration may be helpful in electric vehicle platforms, where the compact packaging of the drive unit and absence of traditional exhaust systems enables implementation of a larger diffuser starting from the battery pack's rear edge. The integration of the wing and diffuser systems creates a coordinated aerodynamic effect that enhances downforce generation while maintaining efficient airflow characteristics.

In some examples, the leading edge slat element can be positioned at various distances ahead of the main wing element when in the deployed position to achieve different aerodynamic effects. The geometric relationship between the slat element and main wing element is engineered to optimize airflow characteristics and performance. The slat helps turn the airflow and generates high suction peaks while being aligned to the oncoming flow at high incidence before turning the flow aggressively.

In some examples, the slat element is intentionally designed as a short element since the large amount of turning with a high adverse pressure gradient stresses the boundary layer along the slat element. The main wing element generates its own suction to support the boundary layer on the slat, making the geometric relationship between the mainplane and slat critical for optimal performance. This coordinated operation enables very high incidence angles while maintaining attached airflow.

The positioning of the slat element relative to the main wing element can be adjusted based on specific performance requirements and operating conditions. In the DRS or low downforce mode, the entire wing assembly rotates to a position where the gap between elements becomes effectively stalled, reducing the slat's influence on airflow and minimizing drag. This allows the system to achieve measurable performance impacts, with deployment effects of +350cts Cd and -1000cts Cl, and rotation effects of -250cts Cd in the deployed state.

The multi-element wing design can present unique manufacturing and integration challenges that require careful consideration of the spatial relationship between components. The slat element requires coordinated motion with the main wing during deployment and stowage, necessitating precise mechanical integration. Support structures and actuation systems are designed to enable and maintain proper positioning while concealed within the vehicle body panels.

While the slat element can be positioned 3-15 millimeters ahead of the main wing element in some examples, other positioning distances are possible depending on the specific aerodynamic requirements and performance targets. The geometric relationship between the slat and main wing elements can be optimized through comprehensive testing and validation processes to achieve desired performance characteristics beyond this range. The positioning distance may be adjusted based on factors such as the degree of airflow turning required, boundary layer behavior, and the specific suction peaks needed for different operating modes. One critical aspect may include maintaining an optimal spatial relationship that enables the slat to effectively turn incoming airflow while working in concert with the main wing element's suction generation, rather than being constrained to a specific distance range. This flexible approach to slat positioning allows the system to be tuned for different vehicle configurations and performance requirements while preserving the core aerodynamic benefits of the multi-element design.

Some further examples of this disclosure include the following:
Example 1 includes a vehicle wing assembly comprising: a multi-element wing including a main wing element and a leading edge slat element; a deployment mechanism configured to move the multi-element wing between: a stowed position in which the main wing element blends with a rear panel of a vehicle and the leading edge slat element is concealed under the rear panel of the vehicle, and an active deployed position in which the multi-element wing is located further away from the vehicle than in the stowed position; a rotation mechanism configured to adjust an angle of attack of the multi-element wing when in the active deployed position; and a controller configured to control the deployment mechanism and the rotation mechanism dynamically to adjust drag and downforce based on one or more vehicle operating parameters.
Example 2 includes the vehicle wing assembly of example 1, wherein the active deployed position of the multi-element wing is located upward and rearward of the stowed position of the multi-element wing.
Example 3 includes the vehicle wing assembly of example 1 or example 2, wherein the deployment mechanism includes a four-bar linkage system comprising one or more linear or rotary actuators.
Example 4 includes the vehicle wing assembly of any one of examples 1-3, wherein the deployment mechanism includes one or more wing support arms, and wherein the rotation mechanism comprises at least one actuator concealed within the one or more wing support arms.
Example 5 includes the vehicle wing assembly of any one of examples 1-4, wherein the rotation mechanism comprises a non-back-drivable actuation system configured to maintain the multi-element wing in a set position without requiring continuous power to the deployment mechanism or the rotation mechanism while experiencing aerodynamic loads.
Example 6 includes the vehicle wing assembly of any one of examples 1-5, wherein the one or more vehicle operating parameters include at least one of: vehicle speed, acceleration, location, driving mode, steering angle, brake actuation, and/or autonomous driving sensor data.
Example 7 includes the vehicle wing assembly of any one of examples 1-6, wherein the rear panel of the vehicle comprises a deck lid, and wherein the main wing element includes a step feature configured to blend with the deck lid when in the stowed position of the multi-element wing.
Example 8 includes the vehicle wing assembly of any one of examples 1-7, wherein the leading edge slat element is positioned 3-15 millimeters ahead of the main wing element when in the active deployed position.
Example 9 includes the vehicle wing assembly of any one of examples 1-8, wherein the deployment mechanism is configured to deploy the multi-element wing in less than 3 seconds.
Example 10 includes the vehicle wing assembly of any one of examples 1-9, wherein the multi-element wing is configured to generate a downforce in a range of 400-700 kg when deployed.
Example 11 includes the vehicle wing assembly of any one of examples 1-10, further comprising an impact protection system configured to retract the multi-element wing upon detecting a rear impact.
Example 12 includes the vehicle wing assembly of example 11, wherein the impact protection system comprises a mechanical latching mechanism configured to maintain the vehicle wing assembly in a deployed position during normal operation, and release automatically in response to a rear impact force exceeding a predetermined threshold.
Example 13 includes the vehicle wing assembly of example 12, wherein the mechanical latching mechanism is calibrated to resist unlatching from aerodynamic loads during normal operation and enable controlled release and retraction specifically in response to impact forces.
Example 14 includes a vehicle wing system for a vehicle, comprising: a deployable wing assembly including: a main airfoil element having a step feature configured to blend with a vehicle body panel when in a stowed position; a leading edge slat element positioned ahead of the main airfoil element when in a deployed position; a deployment mechanism coupled to the deployable wing assembly and configured to transition the deployable wing assembly between the stowed position and the deployed position; and an impact protection system configured to retract the deployable wing assembly upon detecting a rear impact.
Example 15 includes the vehicle wing system of example 14, wherein the deployment mechanism is configured to transition the deployable wing assembly between the stowed position and the deployed position in less than 3 seconds.
Example 16 includes the vehicle wing system of example 14 or example 15, wherein the impact protection system is configured to retract the deployable wing assembly until the deployable wing assembly aligns flush with a rear portion of a vehicle.
Example 17 includes the vehicle wing system of any one of examples 14-16, wherein the deployment mechanism is configured to partially deploy the deployable wing assembly to enable front-to-rear balance adjustment.
Example 18 includes the vehicle wing system of any one of examples 14-17, further comprising one or more sensors configured to detect a rear impact and trigger a retraction of the deployable wing assembly.
Example 19 includes the vehicle wing system of any one of examples 14-18, wherein deployment of the deployable wing assembly provides a change in drag coefficient of approximately +350 counts and a change in lift coefficient of approximately -1000 counts.
Example 20 includes the vehicle wing system of any one of examples 14-19, wherein the impact protection system comprises: a sensor fusion system including one or more of: a proximity sensor integrated into a rear structure of the vehicle; a radar sensor configured to detect approaching objects; a camera system configured to classify potential impact threats; and a pressure sensors configured to detect an actual impact; and a controller configured to: process sensor data to predict a potential impact; and initiate a wing retraction based on either detected actual impact or a predicted potential impact exceeding a collision probability threshold.
Example 21 includes a method comprising: controlling deployment of a multi-element vehicle wing between: a road mode in which a main wing element of the multi-element vehicle wing blends with a vehicle body panel and a slat element of the multi-element vehicle wing is concealed, and a track mode in which the multi-element vehicle wing is deployed upward and rearward; and controlling rotation of the multi-element vehicle wing through a continuous range of angular motion when deployed to adjust one or more of: a downforce by rotating to a high downforce position, a drag by rotating to a drag reduction system (DRS) position, and an aerodynamic balance by rotating to intermediate positions.
Example 22 includes the method of example 21, further comprising retracting the multi-element vehicle wing upon detecting a rear impact.
Example 23 includes the method of example 21 or example 22, wherein controlling rotation in the track mode comprises rotating the multi-element vehicle wing to achieve a change in drag coefficient of approximately -250 counts.

It should be noted that the description and the figures above merely illustrate the principles of the present subject matter along with examples described herein and should not be construed as a limitation to the present subject matter. It is thus understood that various arrangements may be devised that although not explicitly described or shown herein, embody the principles of the present subject matter. Moreover, all statements herein reciting principles, aspects, and implementations of the present subject matter, as well as specific examples thereof, are intended to encompass equivalents thereof.

It is to be understood that not necessarily all objects or advantages may be achieved in accordance with any particular example described herein. Thus, for example, those skilled in the art will recognize that some examples may be operated in a manner that achieves or optimizes one advantage or group of advantages as taught herein without necessarily achieving other objects or advantages as may be taught or suggested herein.

Some of the processes described herein may be embodied in, and fully automated via, software code modules executed by a computing system that includes computers or processors. The code modules may be stored in any type of non-transitory computer-readable medium or other computer storage device. Some or all the methods may be embodied in specialized computer hardware.

Many other variations than those described herein will be apparent from this disclosure. For example, depending on the example, some acts, events, or functions described herein can be performed in a different sequence, can be added, merged, or left out altogether (for example, not all described acts or events are necessary for the practice of the algorithms). Moreover, in some examples, acts or events can be performed concurrently, for example, through multi-threaded processing, interrupt processing, or multiple processors or processor cores, or on other parallel architectures, rather than sequentially. In addition, different tasks or processes can be performed by different machines and/or computing systems that can function together.

Although the described flow diagrams herein can show operations as a sequential process, many of the operations can be performed in parallel or concurrently. In addition, the order of the operations may be re-arranged. A process is terminated when its operations are completed. A process may correspond to a method, a procedure, an algorithm, etc. The operations of methods may be performed in whole or in part, may be performed in conjunction with some or all of the operations in other methods, and may be performed by any number of different systems, such as the systems described herein, or any portion thereof, such as a processor included in any of the systems.

Conditional language such as, among others, "can," "could," "might" or "may," unless specifically stated otherwise, are otherwise understood within the context as used in general to convey that some examples include, while other examples do not include, some features, elements and/or steps. Thus, such conditional language is not generally intended to imply that features, elements and/or steps are in any way for examples or that examples necessarily include logic for deciding, with or without user input or prompting, whether these features, elements and/or steps are included or are to be performed in any particular example.

Disjunctive language such as the phrase "at least one of X, Y, or Z," unless specifically stated otherwise, is otherwise understood with the context as used in general to present that an item, term, etc., may be either X, Y, or Z, or any combination thereof (for example, X, Y, and/or Z). Thus, such disjunctive language is not generally intended to, and should not, imply that some examples require at least one of X, at least one of Y, or at least one of Z to each be present.

Any process descriptions, elements or blocks in the flow diagrams described herein and/or depicted in the attached figures should be understood as potentially representing modules, segments, or portions of code which include executable instructions for implementing specific logical functions or elements in the process. Alternate examples are included within the scope of the examples described herein in which elements or functions may be deleted, executed out of order from that shown, or discussed, including substantially concurrently or in reverse order, depending on the functionality involved as would be understood by those skilled in the art.

It should be emphasized that many variations and modifications may be made to the above-described examples, the elements of which are to be understood as being among other acceptable examples. All such modifications and variations are intended to be included herein within the scope of this disclosure.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B, and C" can include a first processor configured to carry out recitation A working in conjunction with a second processor configured to carry out recitations B and C.

It will also be appreciated that one or more of the elements depicted in the drawings/figures can also be implemented in a more separated or integrated manner, or even removed or rendered as inoperable in certain cases, as is useful in accordance with a particular application.

## Claims

1. A vehicle wing assembly comprising:
a multi-element wing including a main wing element and a leading edge slat element;
a deployment mechanism configured to move the multi-element wing between:
a stowed position in which the main wing element blends with a rear panel of a vehicle and the leading edge slat element is concealed under the rear panel of the vehicle, and
an active deployed position in which the multi-element wing is located further away from the vehicle than in the stowed position;
a rotation mechanism configured to adjust an angle of attack of the multi-element wing when in the active deployed position; and
a controller configured to control the deployment mechanism and the rotation mechanism dynamically to adjust drag and downforce based on one or more vehicle operating parameters.

2. The vehicle wing assembly of claim 1, wherein the active deployed position of the multi-element wing is located upward and rearward of the stowed position of the multi-element wing.

3. The vehicle wing assembly of any one of the preceding claims, wherein the deployment mechanism includes a four-bar linkage system comprising one or more linear or rotary actuators.

4. The vehicle wing assembly of any one of the preceding claims, wherein the deployment mechanism includes one or more wing support arms, and wherein the rotation mechanism comprises at least one actuator concealed within the one or more wing support arms.

5. The vehicle wing assembly of any one of the preceding claims, wherein the rotation mechanism comprises a non-back-drivable actuation system configured to maintain the multi-element wing in a set position without requiring continuous power to the deployment mechanism or the rotation mechanism while experiencing aerodynamic loads.

6. The vehicle wing assembly of any one of the preceding claims, wherein the one or more vehicle operating parameters include at least one of: vehicle speed, acceleration, location, driving mode, steering angle, brake actuation, and/or autonomous driving sensor data.

7. The vehicle wing assembly of any one of the preceding claims, wherein the rear panel of the vehicle comprises a deck lid, and wherein the main wing element includes a step feature configured to blend with the deck lid when in the stowed position of the multi-element wing.

8. The vehicle wing assembly of any one of the preceding claims, wherein the leading edge slat element is positioned 3-15 millimeters ahead of the main wing element when in the active deployed position.

9. The vehicle wing assembly of any one of the preceding claims, wherein the deployment mechanism is configured to deploy the multi-element wing in less than 3 seconds; or optionally
wherein the multi-element wing is configured to generate a downforce in a range of 400-700 kg when deployed.

10. The vehicle wing assembly of any one of the preceding claims, further comprising an impact protection system configured to retract the multi-element wing upon detecting a rear impact.

11. The vehicle wing assembly of claim 10, wherein the impact protection system comprises a mechanical latching mechanism configured to maintain the vehicle wing assembly in a deployed position during normal operation, and release automatically in response to a rear impact force exceeding a predetermined threshold; and optionally
wherein the mechanical latching mechanism is calibrated to resist unlatching from aerodynamic loads during normal operation and enable controlled release and retraction specifically in response to impact forces.

12. A vehicle wing system for a vehicle, comprising:
a deployable wing assembly including:
a main airfoil element having a step feature configured to blend with a vehicle body panel when in a stowed position;
a leading edge slat element positioned ahead of the main airfoil element when in a deployed position;
a deployment mechanism coupled to the deployable wing assembly and configured to transition the deployable wing assembly between the stowed position and the deployed position; and
an impact protection system configured to retract the deployable wing assembly upon detecting a rear impact.

13. The vehicle wing system of claim 12, wherein the deployment mechanism is configured to transition the deployable wing assembly between the stowed position and the deployed position in less than 3 seconds; or optionally
wherein the impact protection system is configured to retract the deployable wing assembly until the deployable wing assembly aligns flush with a rear portion of a vehicle; or optionally
further comprising one or more sensors configured to detect a rear impact and trigger a retraction of the deployable wing assembly; or optionally
wherein deployment of the deployable wing assembly provides a change in drag coefficient of approximately +350 counts and a change in lift coefficient of approximately -1000 counts.

14. The vehicle wing system of claim 12, wherein the impact protection system comprises:
a sensor fusion system including one or more of:
a proximity sensor integrated into a rear structure of the vehicle;
a radar sensor configured to detect approaching objects;
a camera system configured to classify potential impact threats; and
a pressure sensors configured to detect an actual impact; and
a controller configured to:
process sensor data to predict a potential impact; and
initiate a wing retraction based on either detected actual impact or a predicted potential impact exceeding a collision probability threshold.

15. A method comprising:
controlling deployment of a multi-element vehicle wing between:
a road mode in which a main wing element of the multi-element vehicle wing blends with a vehicle body panel and a slat element of the multi-element vehicle wing is concealed, and
a track mode in which the multi-element vehicle wing is deployed upward and rearward; and
controlling rotation of the multi-element vehicle wing through a continuous range of angular motion when deployed to adjust one or more of:
a downforce by rotating to a high downforce position,
a drag by rotating to a drag reduction system (DRS) position, and
an aerodynamic balance by rotating to intermediate positions.
